# EUROPÄISCHE PATENTSCHRIFT

(11) **EP 1 430 643 B1**
(45) Veröffentlichungstag und Bekanntmachung des Hinweises auf die Patenterteilung: **26.10.2011**
(21) Anmeldenummer: 02774355.8
(22) Anmeldetag: 13.09.2002
(51) Int. Cl.: H04L 12/00

(54) **VERFAHREN ZUR ÜBERTRAGUNG VON ECHTZEIT-DATENTELEGRAMMEN IN EINEM ZYKLISCHEN KOMMUNIKATIONSSYSTEM**
METHOD FOR TRANSMITTING REAL TIME DATA MESSAGES IN A CYCLIC COMMUNICATIONS SYSTEM
PROCEDE POUR LA TRANSMISSION DE TELEGRAMMES DE DONNEES TEMPS REEL DANS UN SYSTEME DE COMMUNICATION CYCLIQUE

(30) Priorität: 26.09.2001 DE 10147435; 02.08.2002 DE 10235436
(43) Veröffentlichungstag der Anmeldung: 23.06.2004
(73) Patentinhaber: SIEMENS AKTIENGESELLSCHAFT, 80333 München (DE)
(72) Erfinder: BERNECKER, Herbert, 91560 Heilsbronn (DE); BRÜCKNER, Dieter, 96199 Zapfendorf (DE); GÖTZ, Franz, Josef, 91180 Heideck (DE); KLOTZ, Dieter, 90768 Fürth (DE); SCHIMMER, Jürgen, 90473 Nürnberg (DE); ARNOLD, Johann, 90530 Wendelstein (DE)
(86) Internationale Anmeldenummer: PCT/DE2002/003434
(87) Internationale Veröffentlichungsnummer: WO 2003/028289

(56) Entgegenhaltungen:
- EP-A2- 0 912 028
- EP-A2- 0 912 028
- EP-A2- 1 073 251
- EP-A2- 1 073 251
- US-A- 5 654 969
- US-A- 6 055 242
- US-A1- 2001 002 195
- US-A1- 2002 064 157

## Beschreibung

Die Erfindung betrifft ein Verfahren zur Übertragung von Echtzeit-Datentelegrammen in einem zyklischen Kommunikationssystem, welches Übertragungszyklen aufweist, die sowohl für die Echtzeit-Kommunikation als auch für die Nichtechtzeit-Kommunikation verwendet werden können. Ferner betrifft die Erfindung ein entsprechendes-Kommunikationssystem und einen Teilnehmer eines solchen Kommunikationssystems.

Unter einem synchronen, getakteten Kommunikationssystem mit Äquidistanz-Eigenschaften versteht man ein System aus wenigstens zwei Teilnehmern, die über ein Datennetz zum Zweck des gegenseitigen Austausches von Daten bzw. der gegenseitigen Übertragung von Daten miteinander verbunden sind. Dabei erfolgt der Datenaustausch zyklisch in äquidistanten Kommunikationszyklen, die durch den vom System verwendeten Kommunikationstakt vorgegeben werden.

Teilnehmer sind beispielsweise zentrale Automatisierungsgeräte, Programmier-, Projektierungs- oder Bediengeräte, Peripheriegeräte wie z.B. Ein-/ Ausgabe-Baugruppen, Antriebe, Aktoren, Sensoren, speicherprogrammierbare Steuerungen (SPS) oder andere Kontrolleinheiten, Computer, oder Maschinen, die elektronische Daten mit anderen Maschinen austauschen, insbesondere Daten von anderen Maschinen verarbeiten. Teilnehmer werden auch Netzwerkknoten oder Knoten genannt.

Unter Kontrolleinheiten werden im folgenden Regler- oder Steuerungseinheiten jeglicher Art verstanden, aber auch beispielsweise Koppeleinheiten (sog. Switches) und/oder Switch-Controller. Als Datennetze werden beispielsweise Bussysteme wie z.B. Feldbus, Profibus, Ethernet, Industrial Ethernet, FireWire oder auch PC-interne Bussysteme (PCI), etc., insbesondere aber auch isochrones Realtime Ethernet verwendet.

Datennetze ermöglichen die Kommunikation zwischen mehreren Teilnehmern durch die Vernetzung, also Verbindung der einzelnen Teilnehmer untereinander. Kommunikation bedeutet dabei die Übertragung von Daten zwischen den Teilnehmern. Die zu übertragenden Daten werden dabei als Datentelegramme verschickt, d.h. die Daten werden zu mehreren Paketen zusammengepackt und in dieser Form über das Datennetz an den entsprechenden Empfänger gesendet. Man spricht deshalb auch von Datenpaketen. Der Begriff Übertragung von Daten wird dabei in diesem Dokument völlig synonym zur oben erwähnten Übertragung von Datentelegrammen oder Datenpaketen verwendet.

US 6,055,242 betrifft ein Broadband Multiple Access Protocol für bidirektional Hybrid Fibre / Coax (HFC)-Netzwerke. Das Protokoll unterstützt verschiedene Zugangsmodi, wie etwa einen synchronen Übertragungsmodus oder einen asynchronen Übertragungsmodus. Das Protokoll verwendet ein rahmenbasiertes Zeitschlitzverfahren, wobei einige Zeitschlitze eines Rahmens für die Echtzeitkommunikation verwendet werden

US 2001/0002195 beschreibt ein Verfahren zur Übertragung von zeitempfindlichen Signalen in einem Computernetz mit nichtzeitempfindlichem Verkehr. Geräteadapter sind Zugangspunkte zu einem Ethernet-Netz. Geräteadapter kontrollieren das Timing von allen Paketen, die in das Netz gesendet werden, und beseitigen damit die Kollisionen von zeitempfindlichen Paketen und garantieren eine rechtzeitige Lieferung.

In verteilten Automatisierungssystemen, beispielsweise im Bereich Antriebstechnik, müssen bestimmte Daten zu bestimmten Zeiten bei den dafür bestimmten Teilnehmern eintreffen und von den Empfängern verarbeitet werden. Man spricht dabei von echtzeitkritischen Daten bzw. Datenverkehr, da ein nicht rechtzeitiges Eintreffen der Daten am Bestimmungsort zu unerwünschten Resultaten beim Teilnehmer führt, im Gegensatz zur nicht echtzeitkritischen, beispielsweise inter- bzw. intranetbasierten Datenkommunikation. Gemäß IEC 61491, EN61491 SERCOS interface - Technische Kurzbeschreibung (http://www.sercos.de/deutsch/index_deutsch.htm) kann ein erfolgreicher echtzeitkritischer Datenverkehr der genannten Art in verteilten Automatisierungssystemen gewährleistet werden.

Automatisierungskomponenten (z.B. Steuerungen, Antriebe,...) verfügen heute im Allgemeinen über eine Schnittstelle zu einem zyklisch getakteten Kommunikationssystem. Eine Ablaufebene der Automatisierungskomponente (Fast-cycle) (z.B. Lageregelung in einer Steuerung, Drehmomentregelung eines Antriebs) ist auf den Kommunikationszyklus synchronisiert. Dadurch wird der Kommunikationstakt festgelegt. Andere, niederperformante Algorithmen (Slow-cycle) (z.B. Temperaturregelungen) der Automatisierungskomponente können ebenfalls nur über diesen Kommunikationstakt mit anderen Komponenten (z.B. Binärschalter für Lüfter, Pumpen,...) kommunizieren, obwohl ein langsamerer Zyklus ausreichend wäre. Durch Verwendung nur eines Kommunikationstaktes zur Übertragung von allen Informationen im System entstehen hohe Anforderungen an die Bandbreite der Übertragungsstrecke.

Ein Peripherieabbild setzt sich aus einer Summe von Datensätzen zusammen, die über Echtzeitkommunikation mit anderen Automatisierungsgeräten ausgetauscht werden. Datensätze, die von einem Automatisierungsgerät über die Echtzeitkommunikation empfangen werden sind Eingangsdaten. Datensätze, die von einem Automatisierungsgerät über die Echtzeitkommunikation gesendet werden, sind Ausgangsdaten. In einem Automatisierungsgerät werden in einem Anwendungsprogramm, das zyklisch aufgerufen wird, Eingangsdaten verarbeitet und neue Ausgangsdaten erzeugt. Das Anwendungsprogramm kann sich aus mehreren verschiedenen Funktionen zusammensetzen, die zu unterschiedlichen Zeiten mit verschiedenen Datensätzen arbeiten. Es ist nicht zwingend, dass in jedem Anwendungszyklus alle Funktionen des Anwendungsprogramms aufgerufen werden. Dadurch werden nicht in jedem Anwendungszyklus alle Eingangsdaten verarbeitet und neue Ausgangsdaten generiert.

Bisher werden bei einer zyklischen Echtzeitkommunikation in jedem Kommunikationszyklus alle Daten eines Peripherieabbildes ausgetauscht, unabhängig davon, ob die Eingangsdaten in jedem Anwendungszyklus verarbeitet bzw. neue Ausgangsdaten generiert wurden.

Der Erfindung liegt daher die Aufgabe zu Grunde ein verbessertes Verfahren für die Übertragung von Echtzeit-Datentelegrammen über ein zyklisches Kommunikationssystem, insbesondere Realtime Ethernet, zu schaffen sowie ein entsprechend verbessertes Kommunikationssystem und einen Teilnehmer eines solches Kommunikationssystems.

Die der Erfindung zu Grunde liegenden Aufgaben werden jeweils mit den Merkmalen der entsprechenden unabhängigen Patentansprüche gelöst. Bevorzugte Ausführungsformen der Erfindung sind in den abhängigen Patentansprüchen angegeben.

Erfindungsgemäß wird ein Übertragungszyklus in einen Teil-Zyklus für die geplante Echtzeit-Kommunikation und in einem weiteren Teil-Zyklus für die ungeplante Nichtechtzeit-Kommunikation unterteilt. Die in einem Teilzyklus für die Echtzeit-Kommunikation abzuarbeitende Übertragungssequenz ist dabei nicht für alle Übertragungszyklen statisch, sondern ist dynamisch in Abhängigkeit von der Zyklusnummer programmierbar.

Nach einer bevorzugten Ausführungsform der Erfindung sind für den Teil-Zyklus für die Echtzeit-Kommunikation verschiedene Teil-Sequenzen vorgegeben, wobei eine in einem aktuellen Teil-Zyklus abzuarbeitende Übertragungssequenz in Abhängigkeit von der Zyklusnummer dynamisch aus den vorgegebenen Teil-Sequenzen zusammengesetzt wird. Dadurch ermöglicht die Erfindung, dass nicht jede Übertragungssequenz alle vorkommenden Datentelegramme beinhaltet, sondern dass Datentelegramme, deren Nutzdaten sich nicht geändert haben, ausgelassen werden können.

Nach einer bevorzugten Ausführungsform der Erfindung ist die Übertragungssequenz als Empfangssequenz und / oder Sendesequenz eines Teilnehmers des Kommunikationssystems ausgebildet.

Nach einer weiteren bevorzugten Ausführungsform der Erfindung wird die Unterteilung eines Übertragungszyklus in einen Teil-Zyklus für die Echtzeit-Kommunikation und einen Teil-Zyklus für die Nichtechtzeit-Kommunikation an die aktuell abzuarbeitende Übertragungssequenz adaptiert. Auf diese Art und Weise kann die Länge des Teil-Zyklus für die Echtzeitkommunikation, die für die Bearbeitung der Übertragungssequenz erforderlich ist, in jedem Übertragungszyklus minimiert werden, so dass eine maximale Länge für den zweiten Teil-Zyklus für die Nichtechtzeit-Kommunikation verbleibt.

Nach einer weiteren bevorzugten Ausführungsform der Erfindung wird die Übertragungssequenz aus einer dynamischen Übertragungsliste generiert, die vorgegebene Teil-Sequenzen von zu übertragenden Echtzeit-Datentelegrammen und bedingte Steuerungskommandos aufweist. Die bedingten Steuerungskommandos beinhalten bedingte Sprünge oder Stopkommandos, wobei die Bedingung auf der Zyklusnummer basiert.

Nach einer weiteren bevorzugten Ausführungsform der Erfindung kommt ein Kommunikationssystem zur Anwendung, wie es aus der deutschen Patentanmeldung DE 100 58 524.8 bekannt ist. Ein solches Kommunikationssystem ermöglicht einen Mischbetrieb von echtzeitkritischer und nichtechtzeitkritischer, insbesondere Inter- bzw. Intranet-basierter Datenkommunikation.

Dies ermöglicht sowohl eine echtzeitkritische (RT; Real-Time) als auch eine nicht echtzeitkritische Kommunikation (NRT; Non-Real-Time) in einem schaltbaren Datennetz, bestehend aus Teilnehmern und Koppeleinheiten, beispielsweise eines verteilten Automatisierungssystems durch einen zyklischen Betrieb. In einem sogenannten Übertragungszyklus existiert für alle Teilnehmer und Koppeleinheiten des schaltbaren Datennetzes jeweils wenigstens ein Bereich zur Übermittlung echtzeitkritischer und wenigstens ein Bereich zur Übermittlung nicht echtzeitkritischer Daten, wodurch die echtzeitkritische von der nicht echtzeitkritischen Kommunikation getrennt wird.

Da alle Teilnehmer und Koppeleinheiten immer auf eine gemeinsame Zeitbasis synchronisiert sind, finden die jeweiligen Bereiche zur Übermittlung von Daten für alle Teilnehmer und Koppeleinheiten jeweils zum selben Zeitpunkt statt, d.h. die echtzeitkritische Kommunikation findet zeitlich unabhängig von der nicht echtzeitkritischen Kommunikation statt und wird deshalb nicht von dieser beeinflusst. Die echtzeitkritische Kommunikation wird im Voraus geplant. Einspeisen der Datentelegramme beim originären Sender sowie deren Weiterleitung mittels der beteiligten Koppeleinheiten erfolgt zeitbasiert. Durch Zwischenspeicherung in den jeweiligen Koppeleinheiten wird erreicht, dass zu beliebiger Zeit auftretende, spontane, internetfähige, nicht echtzeitkritische Kommunikation in den für die nicht echtzeitkritische Kommunikation vorgesehenen Übertragungsbereich eines Übertragungszyklus verschoben und auch nur dort übertragen wird.

Ein Übertragungszyklus ist beispielsweise in einen ersten Bereich, der zur Übertragung echtzeitkritischer Daten vorgesehen ist, und einen zweiten Bereich, der zur Übertragung nicht echtzeitkritischer Daten vorgesehen ist, aufgeteilt. Die Länge des dargestellten Übertragungszyklus symbolisiert dessen zeitliche Dauer, die vorteilhafterweise je nach Anwendungszweck zwischen einer Mikrosekunde und zehn Sekunden beträgt.

Die Zeitdauer eines Übertragungszyklus ist veränderbar, wird aber vor dem Zeitpunkt der Datenübertragung, beispielsweise durch einen Steuerungsrechner, wenigstens einmal festgelegt und ist für alle Teilnehmer und Koppeleinheiten des schaltbaren Datennetzes jeweils gleich lang. Die Zeitdauer eines Übertragungszyklus und/oder die Zeitdauer des ersten Bereichs, der zur Übertragung von echtzeitkritischen Daten vorgesehen ist, kann jederzeit, beispielsweise zu vorher geplanten, festen Zeitpunkten und/oder nach einer geplanten Anzahl von Übertragungszyklen, vorteilhafterweise vor Beginn eines Übertragungszyklus verändert werden, indem der Steuerungsrechner beispielsweise auf andere geplante, echtzeitkritische Übertragungszyklen umschaltet.

Darüber hinaus kann der Steuerungsrechner jederzeit im laufenden Betrieb eines Automatisierungssystems je nach Erfordernis Neuplanungen der Echtzeitkommunikation durchführen, wodurch ebenfalls die Zeitdauer eines Übertragungszyklus verändert werden kann. Die absolute Zeitdauer eines Übertragungszyklus ist ein Maß für den zeitlichen Anteil, bzw. die Bandbreite der nicht echtzeitkritischen Kommunikation während eines Übertragungszyklus, also die Zeit, die für die nicht echtzeitkritische Kommunikation zur Verfügung steht. So hat die nicht echtzeitkritische Kommunikation beispielsweise bei einer Zeitdauer eines Übertragungszyklus von 500us eine Bandbreite von 30%, bei 10ms eine Bandbreite von 97%.

Im ersten Bereich, der zur Übertragung echtzeitkritischer Daten vorgesehen ist, ist vor dem Senden der eigentlichen echtzeitkritischen Datentelegramme eine gewisse Zeitdauer zum Senden von Datentelegrammen zur Organisation der Datenübertragung reserviert.

Die Datentelegramme zur Organisation der Datenübertragung enthalten beispielsweise Daten zur Zeitsynchronisation der Teilnehmer und Koppeleinheiten des Datennetzes und/oder Daten zur Topologieerkennung des Netzwerks. Nachdem diese Datentelegramme gesendet wurden, werden die echtzeitkritischen Datentelegramme gesendet.

Da die Echtzeitkommunikation durch den zyklischen Betrieb im Voraus planbar ist, sind für alle zu übertragenden, echtzeitkritischen Datentelegramme die Sendezeitpunkte bzw. die Zeitpunkte für die Weiterleitung der echtzeitkritischen Datentelegramme vor Beginn der Datenübertragung bekannt, d.h. die Zeitdauer des Bereichs zur Übertragung von nicht echtzeitkritischen Daten ist automatisch durch die Zeitdauer des Bereichs zur Übertragung von echtzeitkritischen Daten festgelegt.

Vorteil dieser Anordnung ist, dass jeweils nur die notwendige Übertragungszeit für den echtzeitkritischen Datenverkehr verwendet wird und nach dessen Beendigung die restliche Zeit automatisch für die nicht echtzeitkritische Kommunikation, beispielsweise für die nicht planbare Internetkommunikation bzw. andere, nicht echtzeitkritische Anwendungen zur Verfügung steht.

Besonders vorteilhaft ist, dass die Zeitdauer des Bereichs zur Übertragung von echtzeitkritischen Daten jeweils durch die verbindungsspezifisch zu übertragenden Daten bestimmt wird, d.h., die Zeitdauer der beiden Bereiche wird für jede einzelne Datenverbindung durch die jeweils notwendige Datenmenge der zu übertragenden echtzeitkritischen Daten bestimmt, wodurch die zeitliche Aufteilung der beiden Bereiche für jede einzelne Datenverbindung für jeden Übertragungszyklus verschieden sein kann. Es wird jeweils nur die notwendige Übertragungszeit für den echtzeitkritischen Datenverkehr verwendet und die restliche Zeit eines Übertragungszyklus steht automatisch für die nicht echtzeitkritische Kommunikation, beispielsweise für die nicht planbare Internetkommunikation bzw. andere, nicht echtzeitkritische Anwendungen für alle Teilnehmer des schaltbaren Datennetzes zur Verfügung.

Da die Echtzeitkommunikation im Voraus entsprechend so geplant ist, dass die betrachteten, echtzeitkritischen Datentelegramme spätestens zum Weiterleitungszeitpunkt oder früher in den entsprechenden Koppeleinheiten ankommen, können die echtzeitkritischen Datentelegramme ohne zeitlichen Zwischenraum gesendet bzw. weitergeleitet werden, so dass durch das dicht gepackte Senden, bzw. Weiterleiten, die zur Verfügung stehende Zeitdauer bestmöglich genutzt wird. Selbstverständlich ist es aber auch möglich bei Bedarf Sendepausen zwischen der Übertragung der einzelnen Datentelegramme einzubauen.

Nach einer bevorzugten Ausführungsform der Erfindung hat ein geschaltetes Netzwerk mindestens zwei Teilnehmer, beispielsweise einen Antrieb und einen Steuerrechner, mit jeweils integrierten Koppeleinheiten und einem weiteren Teilnehmer ohne Koppeleinheit, die durch Datenverbindungen miteinander verbunden sind. Die Koppeleinheiten besitzen jeweils lokale Speicher, die über interne Schnittstellen mit den Teilnehmern verbunden sind. Über die Schnittstellen tauschen die Teilnehmer Daten mit den entsprechenden Koppeleinheiten aus.

Die lokalen Speicher sind innerhalb der Koppeleinheiten über die Datenverbindungen mit den Steuerwerken verbunden. Die Steuerwerke empfangen Daten bzw. leiten Daten weiter über die internen Datenverbindungen von bzw. zu den lokalen Speichern oder über eine oder mehrere der externen Ports. Durch Anwendung des Verfahrens der Zeitsynchronisation haben die Koppeleinheiten stets eine gemeinsame, synchrone Zeitbasis.

Hat ein Teilnehmer echtzeitkritische Daten, so werden diese zum vorausgeplanten Zeitpunkt während des, für die echtzeitkritische Kommunikation reservierten Bereichs über die entsprechende Schnittstelle und den lokalen Speicher vom entsprechenden Steuerwerk abgeholt und von dort über den vorgesehenen externen Port zur nächsten verbundenen Koppeleinheit gesendet. Sendet ein anderer Teilnehmer zur gleichen Zeit, also während der echtzeitkritischen Kommunikation, nicht echtzeitkritische Daten, beispielsweise für eine Internetabfrage, so werden diese vom Steuerwerk über den externen Port empfangen und über eine interne Verbindung an den lokalen Speicher weitergeleitet und dort zwischengespeichert.

Von dort werden sie erst im, für die nicht echtzeitkritische Kommunikation reservierten Bereich wieder abgeholt und an den Empfänger weitergeleitet, d.h. sie werden in den zweiten Bereich des Übertragungszyklus verschoben, der für die spontane, nicht echtzeitkritische Kommunikation vorbehalten ist. Störungen der Echtzeitkommunikation werden dadurch ausgeschlossen.

Für den Fall, dass nicht alle zwischengespeicherten, nicht echtzeitkritischen Daten während des, für die Übertragung der nicht echtzeitkritischen Daten vorgesehenen Bereichs eines Übertragungszyklus übertragen werden können, werden sie im lokalen Speicher der entsprechenden Koppeleinheit solange zwischengespeichert, bis sie während eines, für die Übertragung der nicht echtzeitkritischen Daten vorgesehenen Bereichs eines späteren Übertragungszyklus übertragen werden können, wodurch Störungen der Echtzeitkommunikation ebenfalls in jedem Fall ausgeschlossen werden.

Die echtzeitkritischen Datentelegramme, die über entsprechende Datenverbindungen über die externen Ports beim Steuerwerk der zugehörigen Koppeleinheit eintreffen, werden unmittelbar über die entsprechenden externen Ports weitergeleitet. Dies ist möglich, da die Echtzeitkommunikation im Voraus geplant ist und deshalb für alle zu übertragenden, echtzeitkritischen Datentelegramme Sende- und Empfangszeitpunkt, alle jeweils beteiligten Koppeleinheiten sowie alle Zeitpunkte für die Weiterleitung und alle Empfänger der echtzeitkritischen Datentelegramme bekannt sind.

Durch die im Voraus erfolgte Planung der Echtzeitkommunikation ist auch sichergestellt, dass es auf den Datenverbindungen zu keinen Datenkollisionen kommt. Die Weiterleitungszeitpunkte aller echtzeitkritischen Datenpakete von den jeweils beteiligten Koppeleinheiten sind ebenfalls vorher geplant und damit eindeutig festgelegt. Das Ankommen der echtzeitkritischen Datentelegrammen ist deshalb so geplant, dass die betrachteten, echtzeitkritischen Datentelegramme spätestens zum Weiterleitungszeitpunkt oder früher im Steuerwerk der entsprechenden Koppeleinheit ankommen. Damit ist das Problem von Zeitunschärfen, die sich insbesondere bei langen Übertragungsketten bemerkbar machen, eliminiert. Wie oben ausgeführt ist folglich ein gleichzeitiger Betrieb von echtzeitkritischer und nicht echtzeitkritischer Kommunikation im selben schaltbaren Datennetz, sowie ein beliebiger Anschluss von zusätzlichen Teilnehmern an das schaltbare Datennetz möglich, ohne die Echtzeitkommunikation selbst störend zu beeinflussen.

In Anwendung des oben geschilderten Prinzips liegen die Echtzeitdaten, die zwischen Knoten (z.B. Steuerungen, Regelungen, usw.) zyklisch ausgetauscht werden, in einem Peripherieabbildspeicher und werden von einem Anwendungsprogramm, das auf dem Knoten läuft, zyklisch verarbeitet. Die zyklische Verarbeitung kann in jedem Zyklus zum Kommunikationszyklus, bzw. zum Vielfachen eines Kommunikationszyklus synchron erfolgen. Bei Steuerungen kann die Verarbeitung der Echtzeitdaten auch asynchron zum Kommunikationszyklus erfolgen. Es ist nicht zwingend notwendig, dass in einem Kommunikationszyklus alle Echtzeitdaten eines Peripherieabbildes ausgetauscht werden.

Die Erfindung ermöglicht es also, dass nicht alle Daten aus dem Peripherieabbild in jedem Kommunikationszyklus ausgetauscht werden müssen. Dies kann insbesondere die folgenden Vorteile haben:
- Der Kommunikationszyklus ist erheblich schneller als die Änderungsfrequenz von Daten, wie zum Beispiel der Temperatur, im Peripherieabbild. Auf die Übertragung von Datentelegrammen mit unveränderten Nutzdaten kann erfindungsgemäß durch dynamische Anpassung der Übertragungssequenz verzichtet werden.
- Nicht in jedem Kommunikationszyklus werden alle Daten des Peripherieabbildes durch ein Anwendungsprogramm verarbeitet. Das Anwendungsprogramm kann zum Beispiel aus mehreren Funktionen bestehen, die nicht in jedem Kommunikationszyklus ausgeführt werden. Auch wenn sich Nutzdaten eines Datentelegramms ändern, werden diese unter Umständen nicht benötigt, da das Anwendungsprogramm gerade eine andere Funktion ausführt.
- Bei einem isochronen Realtime Ethernet (IRTE) kann eine sehr hohe Bandbreite für die Standard-Ethernet Kommunikation im NRT-Zeitbereich zur Verfügung gestellt werden.

Nach einer bevorzugten Ausführungsform der Erfindung wird das aus der DE 100 58 524.8 bekannte Kommunikationssystem so weitergebildet, dass der Echtzeitbereich bzw. isochrone Realtime (IRT)-Zeitbereich eines Übertragungszyklus in Teil-Sequenzen unterteilt wird. Der IRT-Zeitbereich eines Übertragungszyklus wird im Folgenden als Makro-Zyklus und die Teil-Sequenzen werden als Mikro-Zyklen bezeichnet.

In jedem Makrozyklus müssen bestimmte Echtzeitdaten aus dem Peripherieabbild ausgetauscht werden. Um die Echtzeitdaten zyklisch zu versenden, gibt es Auftragslisten. Eine Auftragsliste setzt sich aus verketteten Kontrollstrukturen zusammen. Jede Kontrollstruktur der Auftragsliste beschreibt an wen, zu welchem Zeitpunkt im Kommunikationszyklus, welche Daten aus dem Peripherieabbild zu versenden sind. In der Auftragsliste gibt es noch zusätzliche Kontrollstrukturen, die festlegen, ob im aktuellen Kommunikationszyklus weitere Echtzeittelegramme versendet werden sollen bzw. das Ende der Abarbeitung der Auftragsliste für den aktuellen Kommunikationszyklus erreicht ist.

Über die Steuerungskommandos in der Auftragsliste kann gesteuert werden, welche Echtzeitdaten in welchem isochronen Kommunikationszyklus übertragen werden. Bei einer Isochrones Realtime Ethernet (IRTE)-Koppeleinheit gibt es für die IRTE-Kommunikation an jedem Sende- und Empfangsport jeweils eine Auftragsliste.

Von besonderem Vorteil ist es darüber hinaus, dass die offenbarten Verfahren in Automatisierungssystemen, insbesondere bei und in Verpackungsmaschinen, Pressen, Kunststoffspritzmaschinen, Textilmaschinen, Druckmaschinen, Werkzeugmaschinen, Robotor, Handlingssystemen, Holzverarbeitungsmaschinen, Glasverarbeitungsmaschinen, Keramikverarbeitungsmaschinen sowie Hebezeugen eingesetzt bzw. verwendet werden können.

Im Weiteren werden bevorzugte Ausführungsbeispiele der Erfindung mit Bezugnahme auf die Zeichnungen näher erläutert. Es zeigen:
- Figur 1: ein Blockdiagramm einer Ausführungsform eines erfindungsgemäßen Teilnehmers,
- Figur 2: eine Ausführungsform einer dynamischen Übertragungsliste mit Teilsequenzen und bedingten Steuerungskommandos,
- Figur 3: die dynamische Aufteilung aufeinanderfolgender Übertragungszyklen.

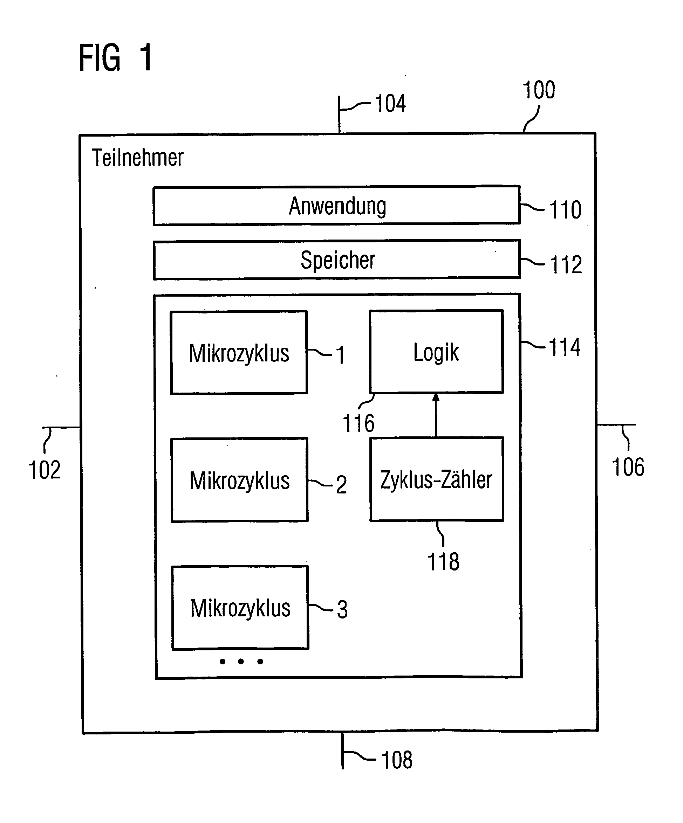

Die Figur 1 zeigt einen Teilnehmer 100 eines isochronen, zyklischen Kommunikationssystems, in dem die Übertragungszyklen in einen IRT-Teil und einen NRT-Teil aufteilbar sind. Das Kommunikationssystem hat weitere Teilnehmer, die prinzipiell gleich wie der Teilnehmer 100 aufgebaut sind.

Der Teilnehmer 100 hat verschiedene Sende- und / oder Empfangs-Ports 102, 104, 106 und 108. Über die Ports 102 bis 108 sendet und / oder empfängt der Teilnehmer 100 Echtzeit- und Nichtechtzeit-Datentelegramme von anderen Teilnehmern des Kommunikationssystems.

Der Teilnehmer 100 hat ein Anwendungsprogramm 110, welches beispielsweise ein Steuerungs- oder Regelungsverfahren implementiert. Für die Steuerung oder Regelung benötigt das Programm 110 fortlaufend Nutzdaten und greift dazu auf den Speicher 112 zu. Ebenso legt das Programm 110 Ausgabedaten in dem Speicher 112 ab. Entsprechend wird der Speicher 112 auch als Kommunikationsspeicher bezeichnet.

Der Teilnehmer 100 hat ferner ein Modul 114, welches für die Erzeugung einer Übertragungssequenz von in einem Übertragungszyklus zu sendenden oder zu empfangenden IRT-Datentelegrammen dient. Das Modul 114 ist dabei dem Port 102 zugeordnet. Vorzugsweise hat jeder der Ports des Teilnehmers 100 ein dediziertes Modul 114.

Das Modul 114 beinhaltet eine Anzahl von Teil-Sequenzen von zu sendenden oder zu empfangenden Datentelegrammen. Diese Teil-Sequenzen sind als Mikro-Zyklen 1, 2, 3, ... in dem Modul 114 abgespeichert. Jeder der Mikro-Zyklen 1, 2, 3, ... besteht dabei aus einer Liste von zu sendenden oder zu empfangenden Datentelegrammen, wobei jeder Listeneintrag die Kennung des betreffenden Datentelegramms und eine Adresse für die entsprechenden Nutzdaten in dem Speicher 112 aufweist.

Das Modul 114 hat ferner eine Logik 116, die beispielsweise durch einen entsprechend programmierten Mikroprozessor oder durch eine anwendungsspezifische integrierte Schaltung (ASIC) zur Verfügung gestellt wird. Die Logik 116 ist mit einem Zykluszähler 118 verknüpft.

Beim Betrieb des Teilnehmers 100 greift die Logik 116 auf den aktuellen Zählerstand des Zykluszählers 118 zu, um die Zyklusnummer des folgenden Übertragungszyklus zu ermitteln. Basierend auf dieser Zyklusnummer stellt die Logik 116 die in dem IRT-Teil des folgenden Übertragungszyklus abzuarbeitende Übertragungssequenz zusammen, indem ein oder mehrere der Mikro-Zyklen 1, 2, 3, ... ausgewählt und zu der Übertragungssequenz zusammengestellt werden.

Die Zusammensetzung einer aktuell in einem Übertragungszyklus abzuarbeitenden übertragungssequenz aus Mikro-Zyklen 1, 2, 3, ... ist also nicht statisch, sondern dynamisch von der Zyklusnummer abhängig. Auf diese Art und Weise variiert die Art und die Anzahl der in dem IRT-Teil der Kommunikationszyklen zu übertragenden Datentelegramme je nach der Anderungsfrequenz der Nutzdaten und / oder nach den Anforderungen des Programms 110.

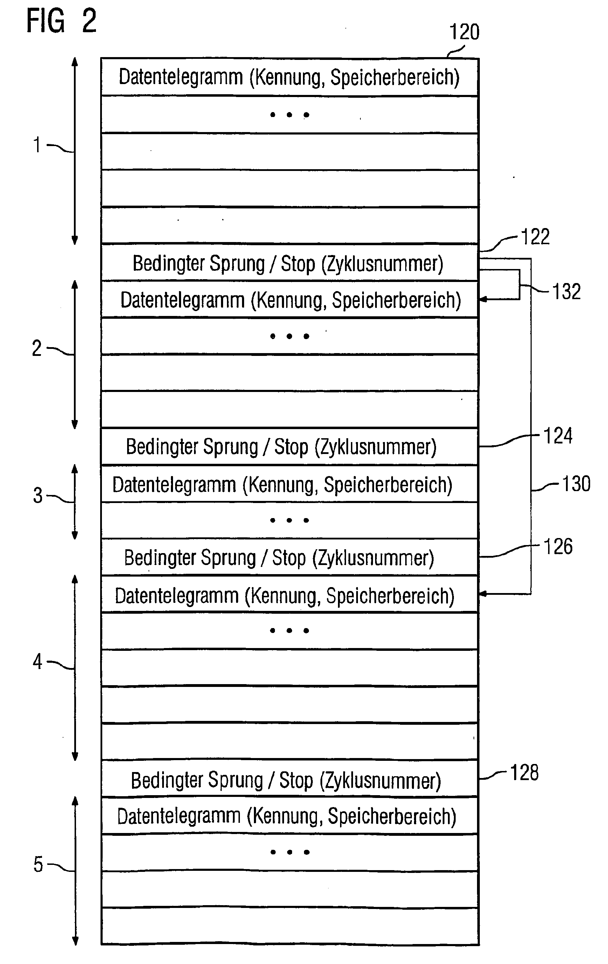

Die Figur 2 zeigt eine Ausführungsform des Moduls 114 der Figur 1:

In dieser Ausführungsform basiert das Modul 114 auf einer dynamischen Übertragungsliste 120, die die Mikro-Zyklen 1, 2, 3, ... beinhaltet, sowie zusätzlich bedingte Steuerüngskommandos.

In dem hier betrachteten Beispielsfall beginnt die Übertragungsliste 120 mit dem Mikrozyklus 1, der von einem Steuerungskommando 122 gefolgt wird.

Auf das Steuerungskommando 122 folgt der Mikro-Zyklus 2, auf den das Steuerungskommando 124 folgt, danach kommt der Mikro-Zyklus 3, das Steuerungskommando 126, der Mikro-Zyklus 4, das Steuerungskommando 128 und der Mikro-Zyklus 5.

Jedes der Steuerungskommandos beinhaltet ein oder mehrere bedingte Sprünge in der Übertragungsliste 120 und / oder einen bedingten Stop. Die Bedingung hängt jeweils von der Zyklusnummer ab.

Beispielsweise beinhaltet das Steuerungskommando 122 einen bedingten Sprung 130 auf den Mikro-Zyklus 4 sowie einen bedingten Sprung 132 auf den Mikro-Zyklus 2 sowie weitere der Übersichtlichkeit halber in der Figur 2 nicht dargestellte bedingte Sprünge.

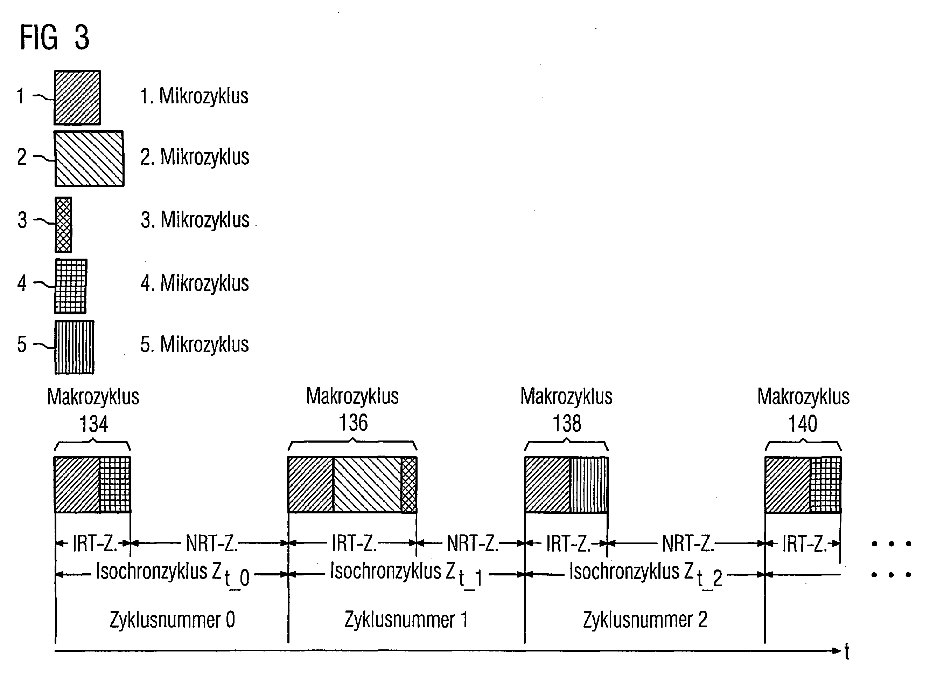

Die Figur 3 veranschaulicht die dynamische Zusammensetzung der Übertragungssequenzen in aufeinanderfolgenden Übertragungszyklen.

Die Mikro-Zyklen 1 bis 5 sind dabei durch unterschiedliche Schraffuren symbolisiert. Entlang der Zeitachse t sind die Übertragungszyklen mit den Zyklusnummern 0, 1 und 2 dargestellt. Die entsprechenden Übertragungszyklen sind in der Figur 3 als Isochronzyklus Z_{t_0}, Isochronzyklus Z_{t_1}, Isochronzyklus Z_{t_2}, ... bezeichnet.

Jeder der Isochronzyklen setzt sich dabei aus einem Teil-Zyklus für die Echtzeit-Kommunikation "IRT-Z." und einen Teil-Zyklus für die Nichtechtzeit-Kommunikation "NRT-Z." zusammen.

Die Aufteilung eines Isochronzyklus in den IRT-Teil und den NRT-Teil ist dynamisch von der Zyklusnummer abhängig. Beispielsweise besteht der IRT-Teil des Isochronzyklus Z_{t_0} aus den Mikro-Zyklen 1 und 4, die den Makro-Zyklus 134 ergeben, worauf der NRT-Teil des Übertragungszyklus folgt, der die verbleibende Zeitdauer in dem Übertragungszyklus mit der Zyklusnummer 0 ausfüllt.

Dies entspricht einer Abarbeitung der Übertragungsliste 120 beginnend mit dem Mikro-Zyklus 1, worauf das Steuerungskommando 122 durchgeführt wird, das heißt wegen der Zyklusnummer "0" ein bedingter Sprung 130 (vgl. Figur 2) auf den Mikro-Zyklus 4. Das Steuerungskommando 122 beendet dann die Übertragungsliste 120 für den Zyklus mit der Zyklusnummer 0.

Entsprechend wird der Makro-Zyklus 136 des danach folgenden Isochronzyklus mit der Zyklusnummer 1 aus den Mikro-Zyklen 1, 2, und 3 zusammengesetzt. In dem Makro-Zyklus 136 des Übertragungszyklus mit der Zyklusnummer 1 erfolgt also der Sprung 132 (vgl. Figur 2).

Der Makro-Zyklus 138 des Übertragungszyklus der Zyklusnummer 2 setzt sich dagegen aus den Mikro-Zyklen 1 und 5 zusammen; der danach folgende Übertragungszyklus der Zyklusnummer 3 hat den Makro-Zyklus 140 mit den Mikro-Zyklen 1 und 4.

## Patentansprüche

1. Verfahren zur Übertragung von Echtzeit-Datentelegrammen in einem zyklischen Kommunikationssystem eines Automatisierungssystems, wobei jeder Übertragungszyklus einen ersten Teil-Zyklus (IRT-Z.) für die Echtzeit-Kommunikation und einen zweiten Teil-Zyklus (NRT-Z.) für die Nichtechtzeit-Kommunikation aufweist,
**dadurch gekennzeichnet, dass**
a) die Echtzeitkommunikation im Voraus geplant ist, sodass die Weiterleitungszeitpunkte aller Echtzeit-Datentelegramme im Voraus bekannt sind,
b) eine Zyklusnummer des Übertragungszyklus bestimmt (118) wird, und
c) eine Übertragungssequenz von Echtzeit-Datentelegrammen in dem ersten Teil-Zyklus bearbeitet wird, wobei die Übertragungssequenz aus einer oder mehreren Teil-Sequenzen (1, 2, 3, 4, 5) zusammengesetzt wird, und die Zusammensetzung in Abhängigkeit der Zyklusnummer - ermittelt wird.

2. Verfahren nach Anspruch 1, **dadurch gekennzeichnet, dass** es sich bei der Übertragungssequenz um eine Empfangssequenz oder eine Sendesequenz eines Teilnehmers (100) des Kommunikationssystems handelt.

3. Verfahren nach Anspruch 1 oder 2, **dadurch gekennzeichnet, dass** die Länge des ersten Teil-Zyklus in Abhängigkeit von der Übertragungssequenz gewählt wird.

4. Verfahren nach Anspruch 1, 2 oder 3, **dadurch gekennzeichnet, dass** die Übertragungssequenz aus einer dynamischen übertragungsliste (120) mit Teil-Sequenzen und bedingten Steuerungskommandos (122, 124, 126, 128) erzeugt wird, wobei die Bedingung auf der Zyklusnummer basiert.

5. Teilnehmer für ein zyklisches Kommunikationssystem eines Automatisierungssystems, ausgebildet für einen Übertragungszyklus mit einem ersten Teil-Zyklus (IRTZ.) für die Echtheit-Kommunikation und einem zweiten Teil-Zyklus (NRT-Z.) für die Nichtechtzeit-Kommunikation, wobei die Echtzeit-Kommunikation derart im Voraus geplant ist, dass die Weiterleitungszeitpunkte aller Echtzeit-Datentelegramme im Voraus bekannt sind, mit
- Mitteln (118) zur Bestimmung einer Zyklusnummer des Übertragungszyklus,
- Mitteln zur Bearbeitung einer Übertragungssequenz in dem ersten Teil-Zyklus, wobei die Übertragungssequenz aus einer oder mehreren Teil-Sequenzen (1, 2, 3, 4, 5) zusammengesetzt wird, und die Zusammensetzung in Abhängigkeit der Zyklusnummer ermittelt wird.

6. Teilnehmer nach Anspruch 5, **dadurch gekennzeichnet, dass** die Übertragungssequenz als Empfangssequenz oder Sendesequenz des Teilnehmers ausgebildet ist.

7. Teilnehmer nach Anspruch 5 oder 6, **gekennzeichnet durch** Mittel zur Wahl der Länge des ersten Teil-Zyklus in Abhängigkeit von der Übertragungssequenz.

8. Teilnehmer nach Anspruch 5, 6 oder 7, **gekennzeichnet durch** Mittel zur Generierung der Übertragungssequenz aus einer dynamischen Übertragungsliste (120) mit Teilsequenzen und bedingten Steuerungskommandos (122, 124, 126, 128), wobei die Bedingung auf der Zyklusnummer basiert.

9. Zyklisches Kommunikationssystem für ein Automatisierungssystem, ausgebildet für einen Übertragungszyklus mit einem ersten Teil-Zyklus (IRT-Z.) für die Echtzeit-Kommunikation und einem zweiten Teil-Zyklus (NRT-Z.) für die Nichtechtzeit-Kommunikation, wobei die Echtzeit-Kommunikation derart im Voraus geplant ist, dass die Weiterleitungszeitpunkte aller Echtzeit-Datentelegramme im Voraus bekannt sind, und mit mindestens einem ersten und einem zweiten Teilnehmer (100), wobei die ersten und zweiten Teilnehmer aufweisen:
- Mittel (118) zur Bestimmung einer Zyklusnummer des übertragungszyklus,
- Mittel zur Bearbeitung einer Übertragungssequenz in dem ersten Teil-Zyklus, wobei die Übertragungssequenz aus einer oder mehreren Teil-Sequenzen (1, 2, 3, 4, 5) zusammengesetzt wird, und die Zusammensetzung in Abhängigkeit der Zyklusnummer ermittelt wird.

10. Zyklisches Kommunikationssystem nach Anspruch 9, **dadurch gekennzeichnet, dass** die Übertragungssequenz als Empfangssequenz oder Sendesequenz ausgebildet ist.

11. Zyklisches Kommunikationssystem nach Anspruch 9 oder 10, **gekennzeichnet durch** Mittel zur Wahl der Länge des ersten Teil-Zyklus in Abhängigkeit von der Übertragungssequenz.

12. Zyklisches Kommunikationssystem nach Anspruch 9, 10 oder 11, **gekennzeichnet durch** Mittel zur Generierung der Übertragungssequenz aus einer dynamischen Übertragungsliste (120) mit Teilsequenzen und bedingten Steuerungskommandos, wobei die Bedingung auf der Zyklusnummer basiert.

## Claims

1. Method for transmitting real-time data messages in a cyclic communication system in an automation system, wherein each transmission cycle has a first cycle element (IRT-Z.) for the real-time communication and a second cycle element (NRT-Z.) for the non-real-time communication,
**characterized in that**
a) the real-time communication is planned in advance, so that the forwarding times of all real-time data messages are known in advance,
b) a cycle number for the transmission cycle is determined (118), and
c) a transmission sequence of real-time data messages is handled in the first cycle element, wherein the transmission sequence is composed of one or more sequence elements (1, 2, 3, 4, 5), and the composition is ascertained on the basis of the cycle number.

2. Method according to Claim 1, **characterized in that** the transmission sequence is a receive sequence or a send sequence of a subscriber (100) in the communication system.

3. Method according to Claim 1 or 2, **characterized in that** the length of the first cycle element is chosen on the basis of the transmission sequence.

4. Method according to Claim 1, 2 or 3, **characterized in that** the transmission sequence is produced from a dynamic transmission list (120) containing sequence elements and conditional control commands (122, 124, 126, 128), wherein the condition is based on the cycle number.

5. Subscriber for a cyclic communication system in an automation system, designed for a transmission cycle having a first cycle element (IRTZ.) for the real-time communication and a second cycle element (NRT-Z.) for the non-real-time communication, wherein the real-time communication is planned in advance such that the forwarding times of all real-time data messages are known in advance, having
- means (118) for determining a cycle number for the transmission cycle,
- means for handling a transmission sequence in the first cycle element, wherein the transmission sequence is composed from one or more sequence elements (1, 2, 3, 4, 5), and the composition is ascertained on the basis of the cycle number.

6. Subscriber according to Claim 5, **characterized in that** the transmission sequence is in the form of a receive sequence or send sequence of the subscriber.

7. Subscriber according to Claim 5 or 6, **characterized by** means for selecting the length of the first cycle element on the basis of the transmission sequence.

8. Subscriber according to Claim 5, 6 or 7, **characterized by** means for generating the transmission sequence from a dynamic transmission list (120) containing sequence elements and conditional control commands (122, 124, 126, 128), wherein the condition is based on the cycle number.

9. Cyclic communication system for an automation system, designed for a transmission cycle having a first cycle element (IRT-Z.) for the real-time communication and a second cycle element (NRT-Z.) for the non-real-time communication, wherein the real-time communication is planned in advance such that the forwarding times of all real-time data messages are known in advance, and having at least one first and a second subscriber (100), wherein the first and second subscribers have:
- means (118) for determining a cycle number for the transmission cycle,
- means for handling a transmission sequence in the first cycle element, wherein the transmission sequence is composed from one or more sequence elements (1, 2, 3, 4, 5), and the composition is ascertained on the basis of the cycle number.

10. Cyclic communication system according to Claim 9, **characterized in that** the transmission sequence is in the form of a receive sequence or send sequence.

11. Cyclic communication system according to Claim 9 or 10, **characterized by** means for selecting the length of the first cycle element on the basis of the transmission sequence.

12. Cyclic communication system according to Claim 9, 10 or 11, **characterized by** means for generating the transmission sequence from a dynamic transmission list (120) containing sequence elements and conditional control commands, wherein the condition is based on the cycle number.

## Revendications

1. Procédé de transmission de télégrammes de données en temps réel dans un système de communication cyclique d'un système d'automatisation, dans lequel chaque cycle de transmission a un premier cycle partiel ( IRT-Z. ), pour la communication en temps réel, et un deuxième cycle partiel ( NRT-Z. ), pour la communication qui n'est pas en temps réel,
**caractérisé en ce que**
a) on planifie la communication en temps réel à l'avance, de manière à connaître à l'avance les instants d'acheminement de tous les télégrammes de données en temps réel,
b) on détermine ( 118 ) un numéro du cycle de transmission, et
c) on traite une séquence de transmission de télégrammes de données en temps réel dans le premier cycle partiel, la séquence de transmission étant composée d'une ou plusieurs séquences partielles ( 1, 2, 3, 4, 5 ) et on détermine la composition en fonction du numéro du cycle.

2. Procédé suivant la revendication 1, **caractérisé en ce que** la séquence de transmission est une séquence de réception ou une séquence d'émission d'un participant ( 100 ) au système de communication.

3. Procédé suivant la revendication 1 ou 2, **caractérisé en ce qu'**on choisit la longueur du premier cycle partiel en fonction de la séquence de transmission.

4. Procédé suivant la revendication 1, 2 ou 3, **caractérisé en ce qu'**on produit la séquence de transmission à partir d'une liste ( 120 ) dynamique de transmission ayant des séquences partielles et des instructions ( 122, 124, 126, 128 ) de commande sous condition, la condition étant basée sur le numéro du cycle.

5. Participant à un système de communication cyclique d'un système d'automatisation constitué pour un cycle de transmission ayant un premier cycle partiel ( IRTZ. ), pour la communication en temps réel, et un deuxième cycle partiel ( NRT-Z. ), pour la communication qui n'est pas en temps réel, la communication en temps réel étant planifiée à l'avance, de manière à connaître à l'avance les instants d'acheminement de tous les télégrammes de données en temps réel, comprenant
- des moyens ( 118 ) de détermination d'un numéro du cycle de transmission,
- des moyens de traitement d'une séquence de transmission dans le premier cycle partiel, la séquence de transmission étant composée d'une ou de plusieurs séquences partielles ( 1, 2, 3, 4, 5 ) et la composition étant déterminée en fonction du numéro du cycle.

6. Participant suivant la revendication 5, **caractérisé en ce que** la séquence de transmission est constituée sous la forme d'une séquence de réception ou d'une séquence d'émission du participant.

7. Participant suivant la revendication 5 ou 6, **caractérisé par** des moyens pour choisir la longueur du premier cycle partiel en fonction de la séquence de transmission.

8. Participant suivant la revendication 5, 6 ou 7, **caractérisé par** des moyens de production de la séquence de transmission à partir d'une liste ( 120 ) dynamique de transmission ayant des séquences partielles et des instructions ( 122, 124, 126, 128 ) de commande sous condition, la condition étant basée sur le numéro du cycle.

9. Système de communication cyclique pour un système d'automatisation constitué pour un cycle de transmission ayant un premier cycle partiel ( IRT-Z. ), pour la communication en temps réel, et un deuxième cycle partiel ( NRT-Z. ), pour la communication qui n'est pas en temps réel, la communication en temps réel étant planifiée à l'avance, de manière à connaître les instants d'acheminement de tous les télégrammes de données en temps réel et comprenant au moins un premier et un deuxième participants ( 100 ), dans lequel les premier et deuxième participants ont :
- des moyens ( 118 ) de détermination d'un numéro du cycle de transmission,
- des moyens de traitement d'une séquence de transmission dans le premier cycle partiel, la séquence de transmission étant composée d'une ou de plusieurs séquences partielles ( 1, 2, 3, 4, 5 ) et la composition étant déterminée en fonction du numéro du cycle.

10. Système de communication cyclique suivant la revendication 9, **caractérisé en ce que** la séquence de transmission est constituée sous la forme d'une séquence de réception ou d'une séquence d'émission.

11. Système de communication cyclique suivant la revendication 9 ou 10, **caractérisé par** des moyens pour choisir la longueur du premier cycle partiel en fonction de la séquence de transmission.

12. Système de communication cyclique suivant la revendication 9, 10 ou 11, **caractérisé par** des moyens de production de la séquence de transmission à partir d'une liste ( 120 ) dynamique de transmission ayant des séquences partielles et des instructions ( 122, 124, 126, 128 ) de commande sous condition, la condition étant basée sur le numéro du cycle.
